(19) Europäisches Patentamt

European Patent Office

Office européen des brevets

(11) **EP 1 418 776 B1**

(12) **EUROPEAN PATENT SPECIFICATION**

(45) Date of publication and mention
of the grant of the patent:
**22.03.2006 Bulletin 2006/12**

(51) Int Cl.:
***H04Q 7/36*** (2006.01)

(21) Application number: **03078518.2**

(22) Date of filing: **07.11.2003**

(54) **Frequency reuse method in an orthogonal frequency division multiplex mobile communication system (OFDM)**

Verfahren zur Wiederverwendung von Frequenzen in einem OFDM-Mobilfunkkommunikationssystem

Procédé de réutilisation de fréquences pour un système de communication mobile à multiplexage de répartition de fréquence orthogonale (OFDM)

(84) Designated Contracting States:
**DE FI FR GB IT SE**

(30) Priority: **07.11.2002 KR 2002068830**
**29.10.2003 KR 2003075845**

(43) Date of publication of application:
**12.05.2004 Bulletin 2004/20**

(73) Proprietor: **SAMSUNG ELECTRONICS CO., LTD.**
**Suwon-City, Kyungki-do (KR)**

(72) Inventors:
• **Hwang, Chan-Soo,**
**303-1704, Jugong Apt.,**
**Suwon-si**
**Gyeonggi-do (KR)**
• **Kim, KI-Ho**
**2-1101, Samsung Apt.,**
**Seoul (KR)**
• **Kim, Young-Soo**
**3-807, Sanga Apt.,**
**Seoul (KR)**
• **Park, Won-Hyoung**
**1502, Mextel,**
**Seoul (KR)**
• **Yun, Sang-Boh**
**1003-401, Samsung Apt.,**
**Kyonggi-Do (KR)**

(74) Representative: **Mertens, Hans Victor**
**Exter Polak & Charlouis B.V., P.O. Box 3241**
**2280 GE Rijswijk (NL)**

(56) References cited:
EP-A- 0 782 360          WO-A-02/49306
US-A- 5 953 661

• WANG ZHAOCHENG ET AL: "Frequency reuse scheme for cellular OFDM systems" ELECTRONICS LETTERS, IEE STEVENAGE, GB, vol. 38, no. 8, 11 April 2002 (2002-04-11), pages 387-388, XP006018189 ISSN: 0013-5194

**EP 1 418 776 B1**

**Description**

The present invention relates generally to a frequency reuse method in a mobile communication system, and in particular, to a frequency reuse method in an orthogonal frequency division multiplex (OFDM) mobile communication system.

Mobile communication systems are designed to provide voice service, ensuring mobility for users. Owing to the drastic development of mobile communication technology and ever-increasing user demands, these mobile communication systems have been developed to additionally provide data service. Data transmission has been evolved from short messages to Internet service. Today, high-rate data transmission such as moving pictures is possible. Transmission schemes, developed from traditional cellular systems, are now under discussion for standardization in the 3rd generation partnership project (3GPP). The 3G mobile communication systems are categorized into synchronous code division multiple access (CDMA) and asynchronous CDMA.

OFDM is a type of multi-carrier modulation. OFDM spread spectrum technology distributes data over multiple carriers spaced from each other with respect to a central frequency, thereby offering orthogonality between the carriers. The OFDM has excellent performance in a multi-path radio environment. For this reason, the OFDM attracts much interest as a suitable modulation scheme for digital terrestrial television service and digital audio broadcasting. Hence it is expected that the OFDM will be adopted as a digital television standard in Europe, Japan, and Australia and is currently envisioned for use in a fourth generation mobile communications system.

For mobile communication applications, the OFDM has the following advantages.

(1) The duration of a single transmission symbol is a multiple of the number of carriers, as compared to a single carrier scheme. If a guard interval is added, multi-path-caused transmission characteristic deterioration can be decreased.
(2) In view of data distribution across the entire frequency band, the influence of interference in a particular frequency is limited to a limited number of data bits, and errors can be reduced by interleaving and error correction codes.
(3) OFDM modulation waves are almost random noise. Thus, their effects on different services are equivalent to the influence of random noise.
(4) The OFDM allows fast Fourier transform (FFT)-based modulation/demodulation.

Because of the above-described and other benefits, many studies are being actively conducted on the OFDM.

However, one base station (BS) can not use all of the available OFDM frequency channels in view of the orthogonality of frequencies used. If a total of 512 frequency channels are available and 4 or 32 frequency channels, here 4 frequency channels are assigned to one user, up to 128 resources are available to a BS. In the case where each BS is allowed to use the 128 resources, the same frequency resources may be used in different BSs. Supposing that there are BS A and BS B adjacent to BS A, both BSs may assign the same 4 channels to mobile stations (MSs) within their cells. If the MSs are near to each other, they experience deterioration of carrier-to-interference ratio (C/I) characteristics.

To solve the problem, each BS adaptively assigns carriers according to interference. The BS assigns a higher priority to an unused frequency in an adjacent BS. It further prioritizes frequencies used in adjacent BSs according to distances between MSs within its cell and those within the adjacent cells. The BS assigns higher-priority frequencies before lower-priority ones.

To make this scheme viable, the BS must predetermine the frequencies that adjacent BSs are using and calculate the distances between an MS being serviced within its cell and MSs being serviced within the adjacent cells. As a result, system complexity is increased.

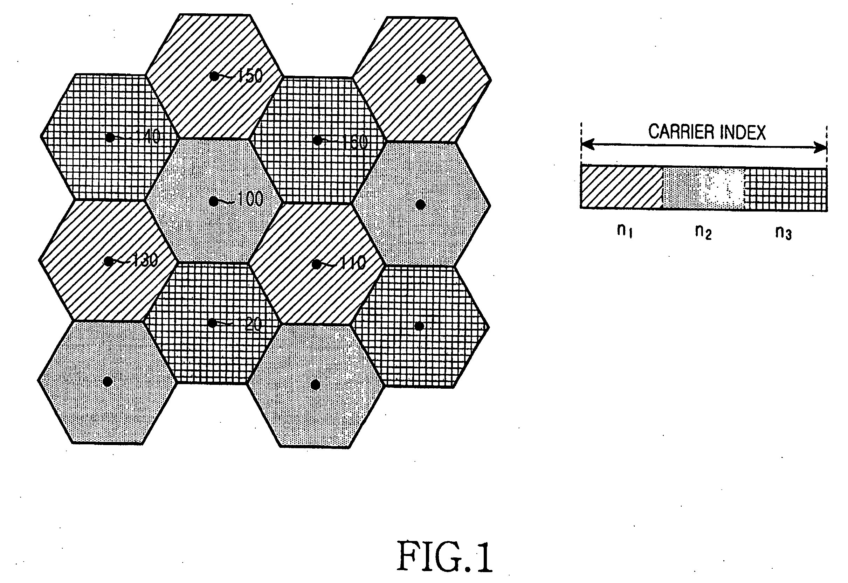

To avoid the constraints, cellular systems implement frequency reuse. Fig. 1 illustrates a conventional frequency reuse scheme with a frequency reuse distance of 3 in an OFDM cellular mobile communication system.

Referring to Fig. 1, a complete frequency bandwidth is partitioned into three parts. A third of the bandwidth is available to each BS so that each of BSs 110 to 160 uses a different frequency from those of its adjacent BSs. For example, BS 100 uses a third of the carrier indexes and its adjacent BSs 120 to 160 use the other two thirds of carrier indexes. Similar system design occurs at the other BSs. Here, the frequency reuse distance is 3. In general, cellular systems implement frequency reuse with a longer frequency distance based on this principle.

Despite the advantage of efficient and non-overlapped frequency use, the above conventional frequency reuse scheme has the distinctive shortcoming that the entire frequency bandwidth cannot be fully utilized in each cell. The number of channels available to a particular BS is the number of serviceable users or the data rates of services. Therefore, the decrease of the number of available channels limits the number of serviceable users or the data rates.

EP 0 782 360 A1 discloses a system and method for a cellular wireless communications system wherein each cell is divided in an inner cell and an outer cell. Reuse partitioning of frequency resources is employed to minimize neighbor-channel interference.

2

WO 02/ 49306 A2 discloses a method for subcarrier selection for a system employing orthogonal frequency division multiple access (OFDMA). Subcarriers are partitioned into a plurality of groups and each group comprises at least one cluster of subcarriers. A subscriber may indicate a selection of one or more groups. At least one cluster is then allocated for use in communication with the subscriber.

US 5 953 661 discloses a system and method for operating a cellular communication system. Cells of said cellular communication system are divided into outer cells and inner cells. At least two frequency reuse patterns are assigned to the cells, one pattern to the outer cells and another, tighter pattern to the inner cells.

It is, therefore, an object of the present invention to provide a method of increasing frequency reuse in an OFDM mobile communication system.

It is another object of the present invention to provide a method of increasing frequency reuse without affecting the data performance of users in an OFDM mobile communication system.

It is a further object of the present invention to provide a method of increasing the availability of frequency resources in an OFDM mobile communication system.

The above objects are achieved by a frequency reuse method in an OFDM mobile communication system. Frequency resources available to each BS are divided into at least four frequency groups and a frequency reuse distance is set for each of the frequency groups. The frequency reuse distance set for each of the frequency group can be the same or different. The frequency groups are sequentially assigned to cell areas of each BS such that lower frequency groups are available to a near cell area and higher frequency resource groups are available to a remote cell area.

Each of the frequency groups includes successive carriers. When frequency hopping is adopted, the frequency resources are divided into the at least four frequency groups according to frequency hopping patterns. At least one of the frequency groups is used with a frequency reuse distance of I in the near cell area. The near cell area is defined according to one of the distance from the BS, a system-required carrier-to-interference ratio (C/I), or interference from an adjacent BS. The at least four frequency groups are of the same size.

To assign frequency resources to MSs in an OFDM mobile communication system, a BS, having first frequency resources for a near cell area and second frequency resources for a remote cell area, determines one of the distance between the BS and an MS, received signal strength, or interference from an adjacent BS, upon request of the MS for OFDM frequency setup. If a predetermined condition is satisfied, the BS establishes a channel with the MS by assigning a first OFDM frequency resource to the MS. If the MS is outside of the near cell area, the BS establishes a channel with the MS by assigning a second OFDM frequency resource to the MS.

To assign OFDM frequency resources to MSs in an OFDM system having a plurality of BSs, each BS communicating with MSs in OFDM, having at least two sub-channel groups, and assigning OFDM frequency resources to an MS requesting a communication, the BS compares the SIR of an MS with a predetermined reference SIR, upon request for an OFDM frequency setup from the MS, and assigns OFDM frequency resources in a low sub-channel group to the MS if the SIR of the MS is lower than the reference SIR.

If at least three sub-channel groups are set and at least two predetermined reference SIRs are used to discriminate the sub-channel groups, the BS assigns to the MS OFDM frequency resources in a sub-channel group corresponding to the lowest of reference SIRs higher than the SIR of the MS.

The sub-channel group for the MS is determined according to the SIR and lognormal fading-including signal loss of the MS.

The above and other objects, features and advantages of the present invention will become more apparent from the following detailed description when taken in conjunction with the accompanying drawings in which:

Fig. 1 illustrates clusters of cells with a frequency reuse distance of 3 according to a conventional frequency reuse scheme in an OFDM cellular mobile communication system;
Fig. 2 illustrates clusters of cells with two frequency reuse distances of 1 and 3 in an OFDM mobile communication system according to an embodiment of the present invention;
Fig. 3 illustrates distance-based division of a cell area into a near area and a remote area according to the present invention;
Fig. 4 is a graph illustrating block probability given by an Erlang B formula;
Fig. 5 illustrates C/I or signal strength-based division of a cell area into a near area and a remote area according to the present invention;
Fig. 6 illustrates clusters of cells with two frequency reuse distances of 1 and 3 in an OFDM mobile communication system adopting frequency hopping according to another embodiment of the present invention;
Fig. 7 illustrates a method of assigning sub-channels to users according to a third embodiment of the present invention;
Fig. 8 illustrates a mesh plot of SIRs at the edges of an inner cell and an outer cell under a load of 50%; and
Fig. 9 illustrates a contour plot of the SIRs at the edges of the inner cell and the outer cell under the load of 50%.

Preferred embodiments of the present invention will be described herein below with reference to the accompanying drawings. In the following description, well-known functions or constructions are not described in detail since they would obscure the invention in unnecessary detail.

It is to be appreciated that while frequency reuse is implemented using two frequency reuse distances of 1 and 3 in the following description of the present invention, the number of frequency reuse distances is not limited. In fact, an OFDM frequency reuse distance can be 3, 4, 7, .... In addition, although hexagonal-shaped cells are artificial and such a shape cannot be generated in the real world, that is, each BS has a different shape of cell coverage, the ideal hexagonal cell shapes are assumed herein.

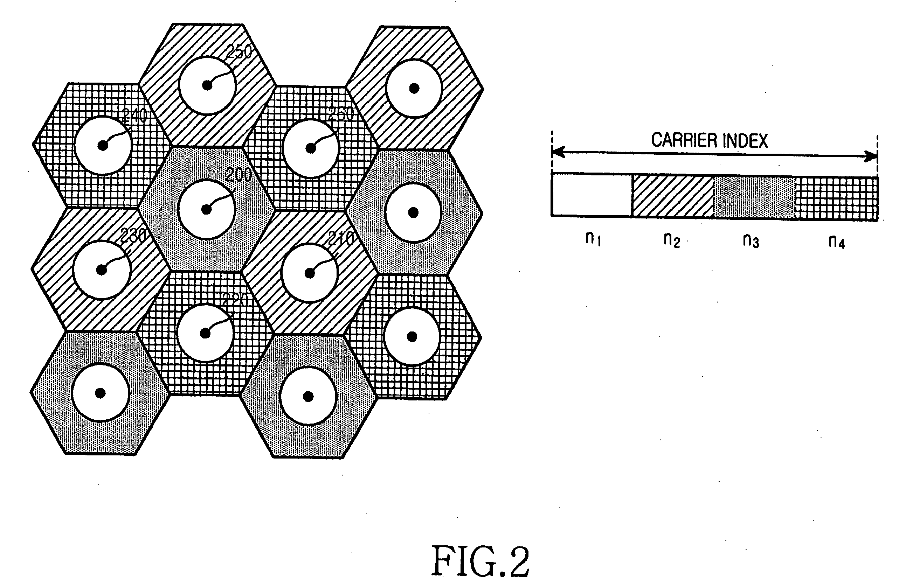

Fig. 2 illustrates a frequency reuse scheme in an OFDM mobile communication system according to an embodiment of the present invention.

Referring to Fig. 2, a given frequency bandwidth is partitioned into four carrier index groups $n_1$ to $n_4$ in order to obtain two frequency reuse distances of 3 and 1. If any other frequency reuse distances are adopted, the frequency bandwidth is partitioned into more or less parts. The reason for using the two frequency reuse distances is to achieve a satisfactory C/I at cell borders or cell edges when the frequency reuse distance of 3 is used. As the system requires a higher C/I level, or propagation loss and fading variance are great, a greater frequency reuse distance, should be used. In other words, the frequency reuse distance is varied according to the configuration of the BSs (i.e., propagation distance, propagation losses, fading variance, system-required C/I, and distance between BS and MS).

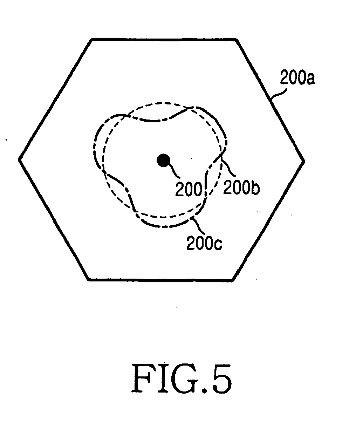

A different frequency reuse distance is used according to the distance from a BS. OFDM carriers are assigned with a frequency reuse distance of 1 in a near cell area and with a frequency reuse distance of 3 in a remote cell area. The cell area can be divided according to C/I instead of the distance. In this case, the cell area is divided into a good channel-condition area and a bad channel-condition area. Since the C/I varies with the layout of buildings and the type of geographic terrain contour, the shapes of cell area coverages are different, which will be described later with reference to Fig. 5.

The frequencies of carrier index group $n_1$ are used in an area apart from each BS by a predetermined distance or less with a frequency reuse distance of 1. The areas are called "near areas (inner cells)" which are circular with respect to the BSs 200 to 260. The remaining areas are called "remote areas (outer cells)." MSs within the near areas generally have good C/I characteristics. The distinction between the near areas and the remote areas can be made by system-required C/I and interference from adjacent BSs, instead of distance.

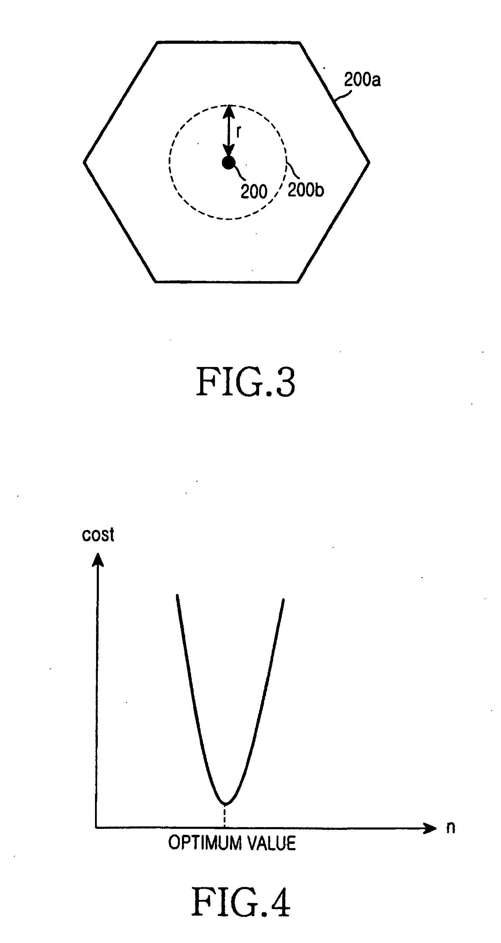

Fig. 3 illustrates a cell which is divided into a near area and a remote area according to distance from a BS in the present invention. Referring to Fig. 3, the cell 200a of the BS 200 covers its signal propagation distance. The cell coverage is divided into a near area 200b with a radius r that is changed according to the characteristics and geographical features of the BS 200. The remaining area outside of the near area 2006 of the cell coverage is defined as a remote area. There is little interference from adjacent BSs within the near area 200b. Thus, application of the frequency reuse distance of 1 to the near area 200b does not affect MSs within other cells.

Returning to Fig. 2, OFDM frequencies are reused in the remote areas as done in the conventional frequency reuse scheme. As stated before, since hexagonal cells are assumed, OFDM frequencies are assigned to the remote areas of the BSs 200 to 260 without overlapped areas. With a frequency reuse distance of 3, the carrier index groups $n_2$, $n_3$ and $n_4$ are available to BSs 200 to 260. Thus, each BS assigns a channel to an MS in its remote area within resources assigned to the BS. For example, if the carrier index group $n_2$ is available to BS 200, BS 200 assigns a channel within the available frequency band to an MS in its remote area.

If the MS is located in the near area of BS 200, BS 200 assigns a channel within the carrier index group $n_1$ to the MS. The same situation occurs within the other BSs all converge areas. That is, if the carrier index group $n_3$ is available to BS 210, the BS 210 assigns a channel in the carrier index group $n_1$ to an MS in its near area and a channel in the carrier index group $n_3$ to an MS in its remote area, as illustrated in Fig. 2.

Fig. 5 illustrates a cell that is divided into a near area and a remote area according to signal strength or C/I in the present invention. The distance-based near area 200b and a C/I-based near area 200C have different borders due to the channel condition between BS 200 and an MS, propagation loss, and the geographical features. While not shown, cell coverage 200a is also different in the real world for the same reason. For clarity of description, the near and remote areas are defined according to the distance from the BSs and the following description is also based on this assumption, even though the near and remote areas have different shapes depending on various factors.

In accordance with the first embodiment of the present invention, the complete frequency bandwidth is partitioned into a predetermined number of carrier index groups. One of the carrier index groups is used with a frequency reuse distance of 1 and the other carrier index groups, with a frequency reuse distance of 3. In case of non-hexagonal-shaped cell coverage, a frequency reuse distance higher than 3 should be used. Then the complete spectrum available is partitioned into (frequency reuse distance +1) parts. While the frequency bandwidth is equally partitioned in this embodiment, the divided carrier index groups may have different sizes considering the geographical features of the cells.

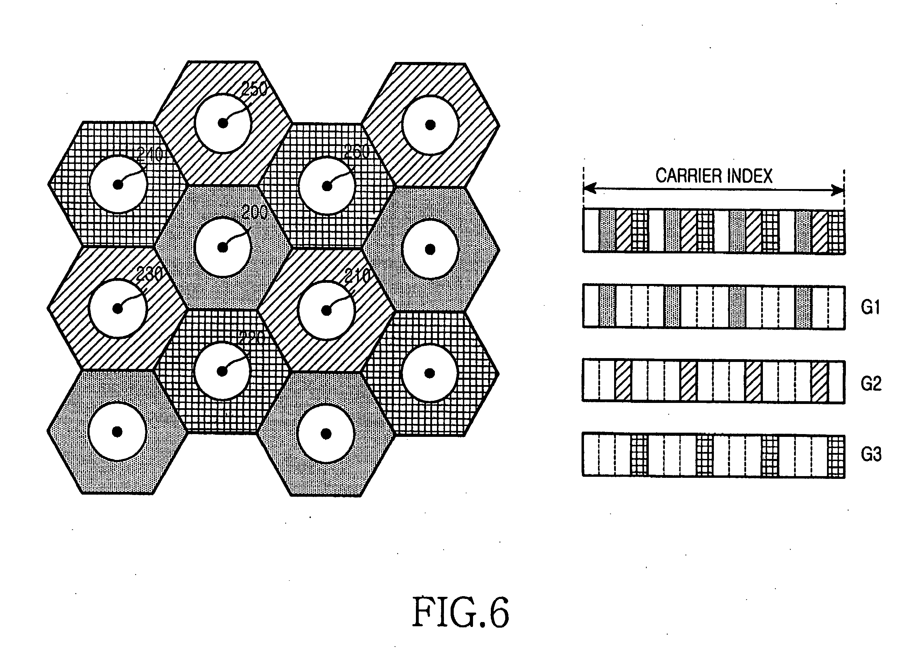

Fig. 6 illustrates clusters of cells with frequency reuse distances of 1 and 3 in an OFDM mobile communication system using frequency hopping according to another embodiment of the present invention.

While the complete spectrum is partitioned into the carrier index group $n_1$ for a frequency reuse distance of 1 and the carrier index groups $n_2$, $n_3$ and $n_4$ for a frequency reuse distance of 3 and each carrier index group has successive carriers in the first embodiment, each carrier index group consists of discontinuous carriers in the second embodiment.

Referring to Fig. 6, to improve frequency diversity, the complete spectrum is partitioned into three carrier index groups, G1, G2 and G3. Each carrier index group includes carriers spaced from each other by a predetermined bandwidth. In the OFDM system using orthogonal frequency hopping, the carrier index groups G1, G2 and G3 are formed according to frequency hopping patterns. Using these carrier groups, different frequency reuse distances are achieved. The carrier group G1 is used in the near areas of BSs 200 to 260 with a frequency reuse distance of 1 and the carrier groups G1, G2 and G3 are used in the remote areas with a frequency reuse distance of 3. The use of frequency hopping effects interference averaging. Therefore, the near areas with the frequency reuse distance of 1 can be widened. As stated before, the near areas are defined according to the distance from the BS or system-required C/I.

Now a description will be made of deriving a cost function on the following suppositions to implement the present invention in an optimizing way.

1. Users are distributed uniformly across a cell and the number of users is determined by an average Poisson process.

2. Cell radius is standardized to 1. A user in a near area with a radius r satisfies system-required frame error rate (FER) even if a frequency reuse distance is set to 1. A user apart from the BS by a distance between r and I satisfies the FER requirement when the frequency reuse distance is 3. All cells are of circular shapes. In this case, the average number of users in the near area is $r^2$ and that of users outside the near area is $1-r^2$. These are identified as separate Poisson processes.

3. If a total of N OFDM carriers are available and M carriers are assigned to each user, the number of available resources is n(=N/M). For an area with a frequency reuse distance of 1, $n_1$ resources are used and for an area with a frequency reuse distance of 3, $n_2$ resources are used. Then, $n = n_1 + 3n_2$. To optimize $n_1$ and $n_2$, the sum of blocking rates is used as the cost function.

4. If no buffers are used in the OFDM system, $n_1$ servers and $n_2$ servers are required and traffic generations rates for $n_1$ and $n_2$ are $R^2$ and $(1-R^2)$, respectively.

On the above suppositions, the blocking probability is given by a known Erlang B formula, expressed as

$$\text{Minimize} \quad \left\{ \frac{\dfrac{\lambda_1^{n_1}}{n_1!}}{\displaystyle\sum_{j=0}^{n_1} \dfrac{\lambda_1^{j}}{j!}} + \frac{\dfrac{\lambda_2^{n_2}}{n_2!}}{\displaystyle\sum_{j=0}^{n_2} \dfrac{\lambda_2^{j}}{j!}} \right\}$$

$$\ldots\ldots(1)$$

where $n_1$ and $n_2$ are the numbers of resources available to the near area and remote area, respectively. $n_1$ and $n_2$ are in the relation that $n = n_1 + 3n_2$. Here, $n_1$ and $n_2$ are integers. $\lambda_1$ and $\lambda_2$ are the probabilities of generating any event in the near area and the remote area, respectively. j is a parameter for summation, ranging from 1 to $n_1$ or from 0 to $n_2$.

The Erlang B formula is represented as a graph illustrated in Fig. 4. Referring to Fig. 4, the blocking probability is always positive and the graph is given as a downwards convex parabola. Therefore, the cost is minimized at the apex of the parabola (i.e., zero differential of the cost function).

The use of the single frequency reuse distance 1 will be compared with the use of the different frequency reuse distances 1 and 3 in combination.

The blocking probability for the frequency reuse distance of 3 is

$$\frac{\dfrac{\lambda^{n/3}}{(n/3)!}}{\displaystyle\sum_{j=0}^{n/3}\frac{\lambda^{j}}{j!}} \qquad \ldots \ldots (2)$$

In accordance with the present invention, n channels are divided into a greater number of sub-channels than in the conventional frequency reuse scheme by further defining an area with the frequency reuse distance of 1. As a result, the number of channels available specifically to each BS is decreased. Yet, if the frequency bandwidth (except the carriers) available commonly to all BSs is partitioned into three parts, $n_1+n_2$ frequencies are eventually available to each BS. Hence, the total number of carriers available to each BS is increased in effect. This was simulated as follows.

The total number of OFDM frequencies is 512 and 4 or 32 channels are available to one user. The total number of available resources is then 128. System load is the ratio of traffic generated per unit time to the total number of available channels. If r is between 0.3 and 0.4 for the frequency reuse distance of 1, the blocking probability is less than that when the frequency reuse distance is 3. If r is increased to 0.9 and the blocking probability is fixed to 0.02, the BS capacity is four times greater than that when the frequency reuse distance is 3.

Frequency resources are assigned to an MS according to one of the distance between the MS and a BS, received signal strength, or interference from adjacent BSs. While the given bandwidth is partitioned into (frequency reuse distance +1) parts, it can be partitioned into more parts. In addition, while the frequency resources are classified into two types, it is obvious that they can be divided into more types.

As described before, when the frequency resources are classified into two types, frequencies in different carrier groups are assigned to an MS in a near area and an MS in a remote area, respectively.

The frequency resources of two types can be assigned to MSs according to received signal strength, or interference from other adjacent BSs. In the case where the frequency resources are classified into more types, MSs are sorted according to the above criteria and the frequency resources are assigned correspondingly

Only the distance between a BS and an MS is considered in the above sub-channel assignment. In a real environment, however, it is preferable to assign a sub-channel group with a relatively low load to a user experiencing the greatest path loss involving lognormal fading. Alternatively, if the SIRs (Signal-to-Interference Ratios) of users are known, it is also preferable to assign a sub-channel with a relatively low load to a user having the lowest SIR. On the assumption that sub-channels are divided into a small path loss group and a great path loss group, sub-channels are assigned to users according to a predetermined reference SIR and the SIRs of the users.

In the case of three sub-channel groups, two or more predetermined reference SIRs are needed to distinguish the sub-channel groups. In this case, OFDM frequency resources in a sub-channel group having the lowest of reference SIRs higher than the SIR of an MS are assigned to the MS.

Hereinbelow, a description is made of a method of assigning sub-channels according to path loss involving lognormal fading and a method of assigning sub-channels according to the SIRs of users.

In general, since an MS near to a BS is remote from adjacent cells, the resulting low signal interference leads to a sufficiently high SIR. In this case, even if traffic load is great, the MS has a substantially low error rate. However, as the MS moves farther from the BS, the channel interference from the adjacent cells increases, resulting in a lower SIR. Therefore, the interference should be reduced for the MS.

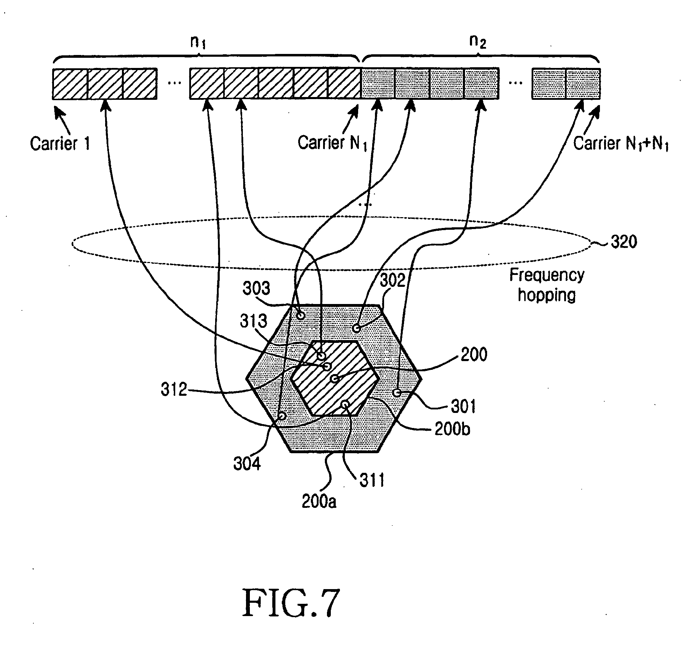

For the purpose, sub-channels are divided into two or more groups relying on the above principle in the present invention. The SIR is improved by assigning sub-channels according to traffic load, instead of distance. Hence, the respective sub-channel groups are assigned to users having different traffic loads, which will be described with reference to Fig. 7. Fig. 7 is a view illustrating a sub-channel assigning method according to a third embodiment of the present invention.

Referring to Fig. 7, the BS is divided into the inner cell 200b and the outer cell 200a. The area division is made according to traffic load, not distance even though the division criterion is shown to be distance due to representational difficulty. In reality, the inner and outer cells can be defined considering distance additionally. Available sub-channels (carriers) are divided into two different groups $n_1$ and $n_2$. Frequencies within the frequency group $n_2$ are assigned to MSs 301 to 304 in the outer cell 200a by frequency hopping 320. Similarly, frequencies within the frequency group $n_1$ are assigned to MSs 311,312 and 313 in the inner cell 200b by the frequency hopping 320.

While two sub-channel groups have been set according to traffic load for notational simplicity, the number of sub-channel groups can be 3 or more. Use of an appropriate number of sub-channel groups according to system environment improves efficiency.

The loads of $n_1$ and $n_2$ are controlled by adjusting the number of sub-channels in the respective sub-channel groups. If each sub-channel group has the same number of sub-channels, the load can be controlled by changing the number of users supported by the sub-channel group. In the case of a high average traffic, an optimum load for a high-load sub-channel group is about 1.0. When adjusting the load, the lowest of the SIRs of users using the high-load sub-channel group should be equal to or higher than the lowest of the SIRs of users using the low-load sub-channel group.

A channel model for the load-based sub-channel assignment and its efficiency will now be described below.

r is a value obtained by dividing the distance between a BS and an MS by the half of the distance between the cell of the BS and its adjacent cell. And a channel between the BS and the MS is modeled as

$$\Gamma(d) = \frac{c}{d^a}$$

$$\ldots\ldots(3)$$

where d is the distance between the BS and the MS and c is a constant determined by a frequency and an environment, and a is a path loss exponent. If $\alpha$ is 2, the channel model is equivalent to a free space model. The SIR of an MS spaced from the BS by r is expressed as

$$\frac{1/r^a}{2p\left[\left(\frac{1}{\sqrt{3}-r}\right)^a + \left(\frac{1}{3+r^2-\sqrt{3}r}\right)^a + \left(\frac{1}{3+r^2+\sqrt{3}r}\right)^a\right]}$$

$$\ldots\ldots(4)$$

On the assumption of a circular cell, the average of packets generated is proportional to area, and the load of the cell is p, $r^2 N_P$ packets are generated within a circle spaced from the BS by a normalized distance as the radius of the circle, r and $(1-r^2)N_P$ packets are generated outside the circle. Here, a target SIR is s.

Now, sub-channels must be arranged in the manner that maximizes p. If N sub-channels are available, $N_1$ sub-channels are assigned to users spaced from the BS by r or below and $N_2$ sub-channels are assigned to users spaced from the BS by a distance longer than r. Then, the loads are $r^2 N_P/N_1$ and $(1-r^2)N_P/N_2$, respectively. Computation of SIRs at the edges of the inner cell and the outer cell by Eq. (4) is represented as

$$\frac{1}{\frac{2p(1-r^2)N}{N-N_1}\left[\left(\frac{1}{\sqrt{3}-1}\right)^a + \left(\frac{1}{4-\sqrt{3}}\right)^a + \left(\frac{1}{4+\sqrt{3}}\right)^a\right]}$$

$$\ldots\ldots(5)$$

$$\cfrac{\raisebox{0.5em}{$1\!\!\Big/\!\!r^{\alpha}$}}{\dfrac{2pr^2N}{N_1}\left[\left(\dfrac{1}{\sqrt{3}-r}\right)^{\alpha}+\left(\dfrac{1}{3+r^2-\sqrt{3}r}\right)^{\alpha}+\left(\dfrac{1}{3+r^2+\sqrt{3}r}\right)^{\alpha}\right]} \quad\dots\dots (6)$$

Therefore, a maximum cell load p higher than the target SIR s, calculated by Eq. (5) and Eq. (6), is a maximum system capacity. On the other hand, with p given, r and $N_1$ are determined such that values calculated by Eq. (5) and Eq. (6) are minimized and thus a minimum SIR is obtained. That is, optimization can be carried out in two ways.

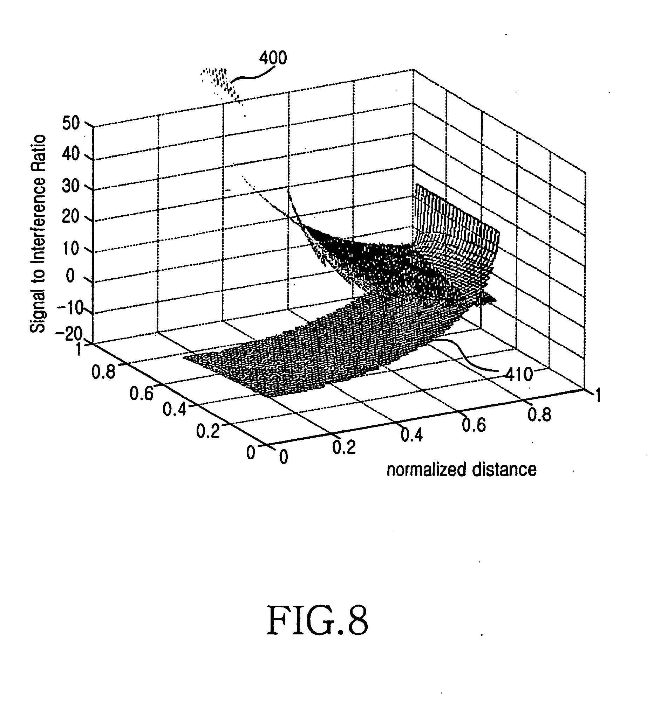

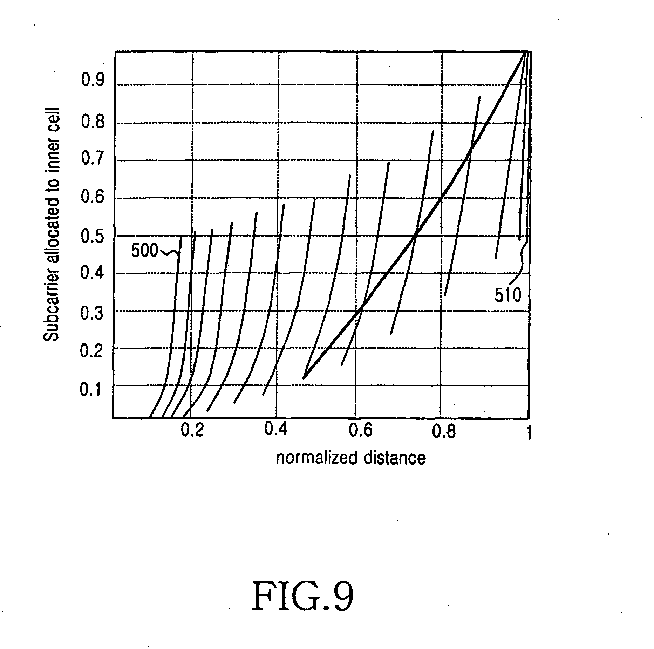

In view of non-linearity of Eq. (5) and Eq. (6) with respect to r and $N_1$, the optimization is done graphically. For example, with $\alpha$ fixed to 4 and r and $N_1/N$ used as variables, SIR is graphed as illustrated in Figs. 8 and 9. Fig. 8 illustrates a mesh plot of SIRs at the edges of the inner cell and the outer cell when the loads are 50% and Fig. 9 illustrates a contour plot of the SIRs at the edges of the inner cell and the outer cell when the loads are 50%.

Referring to Fig. 8, an x axis represents the quotient of dividing the distance between a BS and an MS by the distance between the BS and the remotest MS, a y axis represents the quotient of dividing the number of sub-channels assigned to a high-load frequency hopping group by the number of entire sub-channels, and a z axis represents SIR. The SIR at the highest point of a curve 400 is 50dB and the SIR at the lowest point of the curve 40 is -20dB.

Referring to Fig. 9, an x axis represents the quotient of dividing the distance between a BS and an MS by the distance between the BS and the remotest MS, and a y axis represents the quotient of dividing the number of sub-channels assigned to a high-load frequency hopping group by the number of entire sub-channels. The SIR of a curve 500 nearest to the origin is 50dB, and the SIR of a curve 510 remotest from the origin is -5dB. SIR gain changes with respect of the change of an average load as illustrated from Figs. 8 and 9 are tabulated below.

(Table 1)

| Load | Previous SIR | Current SIR | Gain | r | $N_1/N$ | Inner load |
|------|--------------|-------------|------|------|-------|------------|
| 0.7 | -7dB | -3.85dB | 3.15dB | 0.885 | 0.565 | 0.97 |
| 0.5 | -5.5dB | -2.15dB | 3.35dB | 0.885 | 0.415 | 0.88 |
| 0.3 | -3.3dB | 0.08dB | 3.4dB | 0.83 | 0.32 | 0.65 |
| 0.1 | 1.45dB | 4.dB | 3.1dB | 0.84 | 0.33 | 0.21 |

In Table 1, Load is an overall average load, Previous SIR is an SIR at a cell edge when the inventive sub-channel assignment is not applied, and Current SIR is an SIR at the cell edge when the inventive sub-channel assignment is applied. Gain is the difference between Previous SIR and Current SIR, and r is a value obtained by dividing the distance between a BS and an MS by the half of the distance between cells. $N_1/N$ is obtained by dividing the number of sub-channels assigned to a high-load area by the number of entire sub-channels. Inner load inner the load of a high-load area (in general, the load of a frequency hopping group assigned to a user within a cell). As noted from Table 1, the inventive sub-channel assignment brings an SIR gain of about 3dB.

In accordance with the present invention, OFDM frequencies are partitioned into a predetermined number of parts and each cell is divided into a near area and a remote area. For the near area, a frequency reuse distance of 1 is used and for the remote area, a different frequency reuse distance is used. When frequency hopping is adopted, frequencies are reused in the same manner except that each divided carrier index group has discontinuous carriers. Consequently, frequency utilization is increased.

While the invention has been shown and described with reference to certain preferred embodiments thereof, it will be understood by those skilled in the art that various changes in form and details may be made therein without departing from the scope of the invention as defined by the appended claims.

**Claims**

1.   Frequency reuse method in an orthogonal frequency division multiplex, OFDM, mobile communication system having a plurality of base stations, BS (200), comprising the steps of:

dividing frequency resources available to each BS (200) into at least four frequency groups ($n_1$, $n_2$, $n_3$, $n_4$) and setting a frequency distance for each of the frequency groups ($n_1$, $n_2$, $n_3$, $n_4$); and

sequentially assigning the frequency groups ($n_1$, $n_2$, $n_3$, $n_4$) to cell areas of each BS (200) such that lower frequency groups are available to a near cell area (200b) and higher frequency groups are available to a remote cell area (200a), **characterized in that** at least one of the frequency groups ($n_1$, $n_2$, $n_3$, $n_4$) is used with a frequency reuse distance of 1 in the near cell area (200b).

2. Method according to claim 1, wherein each of the frequency groups ($n_1$, $n_2$, $n_3$, $n_4$) includes successive carriers.

3. Method according to claim 1, wherein when frequency hopping is adopted, the frequency resources are divided into the at least four frequency groups (G1, G2, G3) according to frequency hopping patterns.

4. Method according to claim 1, wherein the near cell area (200b) is defined according to a distance from the BS (200).

5. Method according to claim 1, wherein the near cell area (200b) is defined according to a system-required carrier-to-interference ratio, C/I.

6. Method according to claim 5, wherein the near cell area (200b) is defined according to interference from an adjacent BS (200).

7. Method according to claim 1, wherein the at least four frequency groups ($n_1$, $n_2$, $n_3$, $n_4$) are of the same size.

8. Method according to claim 1, wherein a frequency group ($n_1$, $n_2$, $n_3$, $n_4$) assigned to the near cell area (200b) satisfies

$$Minimize \quad \left\{ \frac{\frac{\lambda_1^{n_1}}{n_1!}}{\sum_{j=0}^{n_1} \frac{\lambda_1^{j}}{j!}} + \frac{\frac{\lambda_2^{n_2}}{n_2!}}{\sum_{j=0}^{n_2} \frac{\lambda_2^{j}}{j!}} \right\}$$

where $n_1$ and $n_2$ are the numbers of frequency resources available to the near cell area (200b) and the remote cell area (200a), respectively, $\lambda_1$ and $\lambda_2$ are the probabilities of generating an event in the near area (200b) and the remote area (200a), respectively, and j is a parameter for summation.

9. Method according to claim 8, wherein the other frequency groups ($n_1$, $n_2$, $n_3$, $n_4$) are of the same size and assigned to the remote cell area (200a).

10. Method according to any of claims I - 9, the method further comprising assigning frequency resources to mobile stations, MS (301, 311), in the base station BS (200) having first frequency resources for the near cell area (200b) and second frequency resources for the remote cell area (200a) in the orthogonal frequency division multiplex OFDM mobile communication system, the method comprising the steps of:

determining a predetermined condition between the BS (200) and one of the MS (301,311) upon request of the MS (301, 311) for OFDM frequency setup;
establishing a channel with the MS (301, 311) by assigning a first OFDM frequency resource to the MS (301, 311) if the predetermined condition is satisfied; and
establishing a channel with the MS (301, 311) by assigning a second OFDM frequency resource to the MS (301, 311) if the MS (301, 311) is outside of the near cell area (200b).

11. Method according to claim 10, wherein the predetermined condition is the distance between the BS (200) and the MS (301, 311).

12. Method according to claim 10, wherein the predetermined condition is the level of interference experienced by the MS (301, 311) from an adjacent BS (200).

**13.** Method according to claim 10, wherein the predetermined condition is the strength of a received signal between the MS (301, 311) and the BS (200).

**14.** Method according to any of claims 1 - 9, the method further comprising assigning orthogonal frequency division multiplex OFDM frequency resources to mobile stations, MSs (301, 311) in the base station BS (200) in the OFDM system having a plurality of BSs (200), each BS (200) communicating with MSs (301, 311) in OFDM having at least two sub-channel groups, and assigning OFDM frequency resources to one of the MS (301, 311) requesting a communication, the method comprising the steps of:

comparing the signal to interference ratio, SIR, of an MS (301, 311) with a predetermined reference SIR, upon request for an OFDM frequency setup from the MS (301,311); and
assigning OFDM frequency resources in a low sub-channel group to the MS (301, 311) if the SIR of the MS (301, 311) is lower than the reference SIR.

**15.** Method according to claim 14, wherein if at least three sub-channel groups are set and at least two predetermined reference SIRs are used to discriminate the sub-channel groups, OFDM frequency resources in a sub-channel group corresponding to the lowest of reference SIRs higher than the SIR of the MS (301, 311) are assigned to the MS (301,311).

**16.** Method according to claim 14, wherein the sub-channel group for the MS (301, 311) is determined according to the SIR and lognormal fading-including signal loss of the MS (301, 311).

**17.** Method according to claim 16, wherein a low-load sub-channel group is assigned to the MS (301, 311) if the MS (301, 311) has a great lognormal fading value.

**18.** Method according to claim 14, wherein the BS (200) hops OFDM frequencies in the sub-channel group for the MS (301,311) during communication with the MS (301, 311) according to a preset frequency hopping rule.

**19.** Method according to any of claims 1 - 9, the method further comprising assigning orthogonal frequency division multiplex OFDM frequency resources to mobile stations, MSs (301, 311), in the base station BS (200) in an OFDM system having a plurality of BSs (200), each BS (200) communicating with MSs (301, 311) in OFDM, having at least two sub-channel groups, and assigning OFDM frequency resources to one of the MS (301, 311) requesting a communication, the method comprising the steps of:

assigning, upon request for an OFDM frequency setup from an MS (301, 311), to the MS (301,311) OFDM frequency resources in a sub-channel group that maximizes load p in Equation (10) and Equation (11), when a channel is modeled as Equation (8) and the average signal to interference ratio, SIR, of an MS (301, 311) spaced from the BS (200) by a distance r is calculated by Equation (9),

$$\Gamma(d) \doteq \frac{c}{d^{\alpha}} \qquad \cdots \cdots (8)$$

$$\frac{1/r^{\alpha}}{2p\left[\left(\frac{1}{\sqrt{3}-r}\right)^{\alpha} + \left(\frac{1}{3+r^{2}-\sqrt{3}r}\right)^{\alpha} + \left(\frac{1}{3+r^{2}+\sqrt{3}r}\right)^{\alpha}\right]} \qquad \cdots \cdots (9)$$

$$\cfrac{1}{\cfrac{2p(1-r^2)N}{N-N_1}\left[\left(\cfrac{1}{\sqrt{3}-1}\right)^{\alpha}+\left(\cfrac{1}{4-\sqrt{3}}\right)^{\alpha}+\left(\cfrac{1}{4+\sqrt{3}}\right)^{\alpha}\right]} \qquad \ldots\ldots (10)$$

$$\cfrac{1/r^{\alpha}}{\cfrac{2pr^2N}{N_1}\left[\left(\cfrac{1}{\sqrt{3}-r}\right)^{\alpha}+\left(\cfrac{1}{3+r^2-\sqrt{3}r}\right)^{\alpha}+\left(\cfrac{1}{3+r^2+\sqrt{3}r}\right)^{\alpha}\right]} \qquad \ldots\ldots (11)$$

where d is the distance between the BS (200) and the MS (301, 311), c is a constant determined by a frequency and an environment, $\alpha$ is a path loss exponent, p is a cell load, N is the number of entire sub-channels, and $N_1$ is the number of sub-channels assigned to an inner cell (200b).

## Patentansprüche

1. Frequenzwiederverwendungsverfahren in einem OFDM-Mobilkommunikationssystem mit einer Vielzahl von Basisstationen (200), das die folgenden Schritte umfasst:

   Unterteilen von Frequenz-Ressourcen, die für jede Basisstation (200) verfügbar sind, in wenigstens vier Frequenzgruppen ($n_1$, $n_2$, $n_3$, $n_4$), und Einstellen eines Frequenzabstandes für jede der Frequenzgruppen ($n_1$, $n_2$, $n_3$, $n_4$); und
   sequenzielles Zuweisen der Frequenzgruppen ($n_1$, $n_2$, $n_3$, $n_4$) zu Zellenbereichen jeder Basisstation (200), so dass niederfrequente Gruppen für einen nahen Zellenbereich (200b) verfügbar sind und höherfrequente Gruppen für einen entfernten Zellenbereich (200a) verfügbar sind, **dadurch gekennzeichnet, dass** wenigstens eine der Frequenzgruppen ($n_1$, $n_2$, $n_3$, $n_4$) mit einem Frequenzwiederverwendungsabstand von 1 in dem nahen Zellenbereich (200b) verwendet wird.

2. Verfahren nach Anspruch 1, wobei jede der Frequenzgruppen ($n_1$, $n_2$, $n_3$, $n_4$) aufeinanderfolgende Träger enthält.

3. Verfahren nach Anspruch 1, wobei, wenn Frequenzspringen eingesetzt wird, die Frequenz-Ressourcen entsprechend Frequenzspringmustern in die wenigstens vier Frequenzgruppen (G1, G2, G3) unterteilt werden.

4. Verfahren nach Anspruch 1, wobei der nahe Zellenbereich (200b) entsprechend einem Abstand zu der Basisstation (200) definiert wird.

5. Verfahren nach Anspruch 1, wobei der nahe Zellenbereich (200b) entsprechend einem vom System benötigten Träger/Interferenz-Verhältnis (carrier-to-interference ratio - C/I) definiert wird.

6. Verfahren nach Anspruch 5, wobei der nahe Zellenbereich (200b) entsprechend Interferenz von einer angrenzenden Basisstation (200) definiert wird.

7. Verfahren nach Anspruch 1, wobei die wenigstens vier Frequenzgruppen ($n_1$, $n_2$, $n_3$, $n_4$) die gleiche Größe haben.

8. Verfahren nach Anspruch 1, wobei eine Frequenzgruppe ($n_1$, $n_2$, $n_3$, $n_4$), die dem nahen Zellenbereich (200b) zugewiesen wird, folgende Bedingung erfüllt:

$$\text{Minimize} \quad \left\{ \frac{\frac{\lambda_1^{n_1}}{n_1!}}{\sum_{j=0}^{n_1} \frac{\lambda_1^{j}}{j!}} + \frac{\frac{\lambda_2^{n_2}}{n_2!}}{\sum_{j=0}^{n_2} \frac{\lambda_2^{j}}{j!}} \right\}$$

wobei $n_1$ und $n_2$ die Anzahl von Frequenz-Ressourcen sind, die für den nahen Zellenbereich (200b) bzw. den entfernten Zellenbereich (200a) verfügbar sind, $\lambda_1$ und $\lambda_2$ die Wahrscheinlichkeiten der Erzeugung eines Ereignisses in dem nahen Bereich (200b) bzw. dem entfernten Bereich (200a) sind und j ein Parameter zur Summierung ist.

9. Verfahren nach Anspruch 8, wobei die anderen Frequenzgruppen ($n_1$, $n_2$, $n_3$, $n_4$) die gleiche Größe haben und dem entfernten Zellenbereich (200a) zugewiesen werden.

10. Verfahren nach einem der Ansprüche 1 - 9, wobei das Verfahren des Weiteren das Zuweisen von Frequenz-Ressourcen zu Mobilstationen (301, 311) in der Basisstation (200) mit ersten Frequenz-Ressourcen für den nahen Zellenbereich (200b) und zweiten Frequenz-Ressourcen für den entfernten Zellenbereich (200a) in dem OFDM-Mobilkommunikationssystem umfasst und das Verfahren die folgenden Schritte umfasst:

   Feststellen einer vorgegebenen Bedingung zwischen der Basisstation (200) und einer der Mobilstationen (301, 311) auf Anforderung von OFDM-Frequenzeinstellung von der Mobilstation (301, 311);
   Einrichten eines Kanals mit der Mobilstation (301, 311) durch Zuweisen einer ersten OFDM-Frequenz-Ressource zu der Mobilstation (301, 311), wenn die vorgegebene Bedingung erfüllt ist; und
   Einrichten eines Kanals mit der Mobilstation (301, 311) durch Zuweisen einer zweiten OFDM-Frequenz-Ressource zu der Mobilstation (301, 311), wenn sich die Mobilstation (301, 311) außerhalb des nahen Zellenbereiches (200b) befindet.

11. Verfahren nach Anspruch 10, wobei die vorgegebene Bedingung der Abstand zwischen der Basisstation (200) und der Mobilstation (301, 311) ist.

12. Verfahren nach Anspruch 10, wobei die vorgegebenen Bedingung der Pegel von Interferenz ist, dem die Mobilstation (301, 311) von einer benachbarten Basisstation (200) ausgesetzt ist.

13. Verfahren nach Anspruch 10, wobei die vorgegebene Bedingung die Stärke eines empfangenen Signals zwischen der Mobilstation (301, 311) und der Basisstation (200) ist.

14. Verfahren nach einem der Ansprüche 1 - 9, wobei das Verfahren des Weiteren Zuweisen von OFDM-Frequenz-Ressourcen zu Mobilstationen (301, 311) in der Basisstation (22) in dem OFDM-System mit einer Vielzahl von Basisstationen (200) umfasst, wobei jede Basisstation (200) mit Mobilstationen (301, 311) im OFDM-Verfahren mit wenigstens zwei Teilkanalgruppen kommuniziert, sowie Zuweisen von OFDM-Frequenz-Ressourcen zu einer der Mobilstationen (301, 311), die eine Kommunikation anfordert, wobei das Verfahren die folgenden Schritte umfasst:

   Vergleichen des Signal/Interferenz-Verhältnisses (signal to interference ratio - SIR) einer Mobilstation (301, 311) mit einem vorgegebenen Bezugs-Signal/Interferenz-Verhältnis auf Anforderung einer OFDM-Frequenzeinstellung von der Mobilstation (301, 311); und
   Zuweisen von OFDM-Frequenz-Ressourcen in einer niederen Teilkanalgruppe zu der Mobilstation (301, 311), wenn das Signal/Interferenz-Verhältnis der Mobilstation (301, 311) niedriger ist als das Bezugs-Signal/Interferenz-Verhältnis.

15. Verfahren nach Anspruch 14, wobei, wenn wenigstens drei Teilkanalgruppen eingerichtet sind und wenigstens zwei vorgegebene Bezugs-Signal/Interferenz-Verhältnisse verwendet werden, um die Teilkanalgruppen zu unterscheiden, OFDM-Frequenz-Ressourcen in einer Teilkanalgruppe, die dem niedrigsten der Bezugs-Signal/Interferenz-Verhältnisse entspricht, das höher ist als das Signal/Interferenz-Verhältnis der Mobilstation (301, 311), der Mobilstation (301, 311) zugewiesen werden.

**16.** Verfahren nach Anspruch 14, wobei die Teilkanalgruppe für die Mobilstation (301, 311) entsprechend dem Signal/Interterenz-Verhältnis und Lognormal-Fading einschließendem Signalverlust der Mobilstation (301, 311) bestimmt wird.

**17.** Verfahren nach Anspruch 16, wobei eine Niedriglast-Teilkanalgruppe der Mobilstation (301, 311) zugewiesen wird, wenn die Mobilstation (301, 311) einen großen Lognormal-Fading-Wert hat.

**18.** Verfahren nach Anspruch 14, wobei die Basisstation (200) während der Kommunikation mit der Mobilstation (301, 311) entsprechend einer voreingestellten Frequenzspringregel Frequenzspringen von OFDM-Frequenzen in der Teilkanalgruppe für die Mobilstation (301, 311) durchführt.

**19.** Verfahren nach einem der Ansprüche 1 - 9, wobei das Verfahren des Weiteren Zuweisen von OFDM-Frequenz-Ressourcen zu Mobilstationen (301, 311) in der Basisstation (200) in einen OFDM-System mit einer Vielzahl von Basisstationen (200), umfasst, wobei jede Basisstation (200) mit Mobilstationen (301, 311) im OFDM-Verfahren mit wenigstens zwei Teilkanalgruppen kommuniziert, sowie Zuweisen von OFDM-Frequenz-Ressourcen zu einer der Mobilstationen (301, 311), die eine Kommunikation anfordert, und das Verfahren die folgenden Schritte umfasst:

bei Anforderung einer OFDM-Frequenzeinstellung von einer Mobilstation (301,311) Zuweisen von OFDM-Frequenz-Ressourcen in einer Teilkanalgruppe, die Last p in Gleichung (10) und Gleichung (11) maximiert, zu der Mobilstation (301, 311), wenn ein Kanal als Gleichung (8) moduliert ist und das durchschnittliche Signal/Interferenz-Verhältnis (SIR) einer Mobilstation (301, 311), die von der Basisstation (200) um einen Abstand r entfernt ist, mit Gleichung (9) berechnet wird,

$$\Gamma(d) = \frac{c}{d^{\alpha}} \qquad \dots \dots (8)$$

$$\frac{1/r^{\alpha}}{2p\left[\left(\frac{1}{\sqrt{3}-r}\right)^{\alpha} + \left(\frac{1}{3+r^2-\sqrt{3}r}\right)^{\alpha} + \left(\frac{1}{3+r^2+\sqrt{3}r}\right)^{\alpha}\right]} \qquad \dots \dots (9)$$

$$\frac{1}{\frac{2p(1-r^2)N}{N-N_1}\left[\left(\frac{1}{\sqrt{3}-1}\right)^{\alpha} + \left(\frac{1}{4-\sqrt{3}}\right)^{\alpha} + \left(\frac{1}{4+\sqrt{3}}\right)^{\alpha}\right]} \qquad \dots \dots (10)$$

$$\frac{1/r^{\alpha}}{\frac{2pr^2N}{N_1}\left[\left(\frac{1}{\sqrt{3}-r}\right)^{\alpha} + \left(\frac{1}{3+r^2-\sqrt{3}r}\right)^{\alpha} + \left(\frac{1}{3+r^2+\sqrt{3}r}\right)^{\alpha}\right]} \qquad \dots \dots (11)$$

wobei d der Abstand zwischen der Basisstation (200) und der Mobilstation (301, 311) ist, c eine Konstante ist, die durch eine Frequenz und eine Umgebung bestimmt wird, $\alpha$ ein Ausbreitungsdämpfungsexponent ist, p eine Zellenlast ist, N die Anzahl aller Teilkanäle ist und $N_1$ die Anzahl von Teilkanälen ist, die einer inneren Zelle (200b) zugewiesen werden.

**Revendications**

1. Procédé de réutilisation de fréquence dans un système de communications mobiles à multiplex à division de fréquence orthogonale, (OFDM), possédant une pluralité de stations de base, BS (200), comprenant les étapes consistant à :

   diviser les ressources de fréquence disponibles pour chaque BS (200) en au moins quatre groupes de fréquences ($n_1$, $n_2$, $n_3$, $n_4$) et définir une distance de fréquence pour chacun des groupes de fréquences ($n_1$, $n_2$, $n_3$, $n_4$) ; et attribuer séquentiellement les groupes de fréquences ($n_1$, $n_2$, $n_3$, $n_4$) à des zones de cellules de chaque BS (200) de telle sorte que les groupes de fréquences inférieurs soient disponibles pour une zone de cellule proche (200b) et que les groupes de fréquences supérieurs soient disponibles pour une zone de cellule éloignée (200a), **caractérisé en ce qu'**au moins l'un des groupes de fréquences ($n_1$, $n_2$, $n_3$, $n_4$) est utilisé avec une distance de réutilisation de fréquence de 1 dans la zone de cellule proche (200b).

2. Procédé selon la revendication 1, dans lequel chacun des groupes de fréquences ($n_1$, $n_2$, $n_3$, $n_4$) comprend des porteuses successives.

3. Procédé selon la revendication 1, dans lequel, lorsqu'un saut de fréquence est adopté, les ressources de fréquence sont divisées en au moins quatre groupes de fréquences (G1, G2, G3) selon les modèles de saut de fréquence.

4. Procédé selon la revendication 1, dans lequel la zone de cellule proche (200b) est définie selon une distance par rapport à la BS (200).

5. Procédé selon la revendication 1, dans lequel la zone de cellule proche (200b) est définie selon un rapport porteuse/brouillage requis par le système, C/I.

6. Procédé selon la revendication 5, dans lequel la zone de cellule proche (200b) est définie selon un brouillage issu d'une BS adjacente (200).

7. Procédé selon la revendication 1, dans lequel les quatre groupes de fréquences au moins ($n_1$, $n_2$, $n_3$, $n_4$) sont de la même taille.

8. Procédé selon la revendication 1, dans lequel un groupe de fréquences ($n_1$, $n_2$, $n_3$, $n_4$) attribué à la zone de cellule proche (200b) satisfait

$$\text{Minimize} \left\{ \frac{\frac{\lambda_1^{n_1}}{n_1!}}{\sum_{j=0}^{n_1} \frac{\lambda_1^j}{j!}} + \frac{\frac{\lambda_2^{n_2}}{n_2!}}{\sum_{j=0}^{n_2} \frac{\lambda_2^j}{j!}} \right\}$$

où $n_1$ et $n_2$ sont les nombres de ressources de fréquence disponibles pour la zone de cellule proche (200b) et la zone de cellule éloignée (200a), respectivement, $\lambda_1$ et $\lambda_2$ sont les probabilités de génération d'un évènement dans la zone proche (200b) et la zone éloignée (200a), respectivement, et j est un paramètre de sommation.

9. Procédé selon la revendication 8, dans lequel les autres groupes de fréquences ($n_1$, $n_2$, $n_3$, $n_4$) sont de la même taille et sont attribués à la zone de cellule éloignée (200a).

10. Procédé selon l'une quelconque des revendications 1 à 9, le procédé comprenant en outre l'attribution de ressources de fréquence à des stations mobiles, MS (301, 311), dans la station de base BS (200) possédant des premières ressources de fréquence destinées à la zone de cellule proche (200b) et des secondes ressources de fréquence destinées à la zone de cellule éloignée (200a) dans le système de communications mobiles à multiplex à division de fréquence orthogonale OFDM, le procédé comprenant les étapes consistant à :

déterminer une condition prédéterminée entre la BS (200) et l'une des MS (301, 311), à la demande de la MS (301, 311), pour une configuration de fréquence de l'OFDM ;

établir un canal avec la MS (301, 311) en attribuant une première ressource de fréquence OFDM à la MS (301, 311) si la condition prédéterminée est satisfaite ; et

établir un canal avec la MS (301, 311) en attribuant une seconde ressource de fréquence OFDM à la MS (301, 311) si la MS (301, 311) se trouve en-dehors de la zone de cellule proche (200b).

11. Procédé selon la revendication 10, dans lequel la condition prédéterminée est la distance entre la BS (200) et la MS (301, 311).

12. Procédé selon la revendication 10, dans lequel la condition prédéterminée est le niveau de brouillage subi par la MS (301, 311) à partir d'une BS adjacente (200).

13. Procédé selon la revendication 10, dans lequel la condition prédéterminée est l'intensité d'un signal reçu entre la MS (301, 311) et la BS (200).

14. Procédé selon l'une quelconque des revendications 1 à 9, le procédé comprenant en outre l'attribution de ressources de fréquence OFDM à multiplex à division de fréquence orthogonale aux stations mobiles, MS (301, 311) dans la station de base BS (200) dans le système OFDM possédant une pluralité de BS (200) communiquant avec les MS (301, 311) dans un OFDM possédant au moins deux groupes de sous-canaux, et l'attribution de ressources de fréquence OFDM à l'une des MS (301, 311) demandant une communication, le procédé comprenant les étapes consistant à :

comparer le rapport signal/brouillage, SIR, d'une MS (301, 311) avec un SIR de référence prédéterminé, lors de la demande d'une configuration de fréquence OFDM de la part de la MS (301, 311) ; et

l'attribution de ressources de fréquence OFDM dans un groupe de sous-canaux, à la MS (301, 311), si le SIR de la MS (301, 311) est inférieur au SIR de référence.

15. Procédé selon la revendication 14, dans lequel, si au moins trois groupes de sous-canaux sont définis et au moins deux SIR de référence prédéterminés sont utilisés afin de distinguer les groupes de sous-canaux, des ressources de fréquence OFDM dans un groupe de sous-canaux correspondant au moins élevé des SIR de référence supérieurs au SIR de la MS (301, 311) sont attribuées aux MS (301, 311).

16. Procédé selon la revendication 14, dans lequel le groupe de sous-canaux des MS (301, 311) est déterminé selon le SIR et un évanouissement logarithmico-normal comprenant une perte de signal de la MS (301, 311).

17. Procédé selon la revendication 16, dans lequel un groupe de sous-canaux à faible charge est attribué aux MS (301, 311) si la MS (301, 311) possède une valeur d'évanouissement logarithmico-normal importante.

18. Procédé selon la revendication 14, dans lequel la BS (200) saute les fréquences OFDM dans le groupe de sous-canaux des MS (301, 311) pendant la communication avec la MS (301, 311) selon une règle de saut de fréquence prédéfinie.

19. Procédé selon l'une quelconque des revendications 1 à 9, le procédé comprenant en outre l'attribution de ressources de fréquences OFDM (multiplex à division de fréquence orthogonale) à des stations mobiles, MS (301, 311), dans la station de base BS (200) dans un système OFDM possédant une pluralité de BS (200), chaque BS (200) communiquant avec des MS (301, 311) dans le OFDM, possédant au moins deux groupes de sous-canaux, et l'attribution de ressources de fréquence OFDM à l'une des MS (301, 311) demandant une communication, le procédé comprenant les étapes consistant à :

attribuer, lors d'une demande de configuration de fréquence OFDM de la part d'une MS (301, 311), à la MS (301, 311), des ressources de fréquence OFDM dans un groupe de sous-canaux qui maximise la charge p dans l'équation (10) et l'équation (11), lorsqu'un canal est modélisé comme l'équation (8), et dans lequel le rapport signal/brouillage moyen, SIR, d'une MS (301, 311) espacée de la BS (200) par une distance r est calculé par l'équation (9),

$$\Gamma(d) = \frac{c}{d^\alpha}$$

$$\cdots (8)$$

$$\frac{1/r^\alpha}{2p\left[\left(\frac{1}{\sqrt{3}-r}\right)^\alpha + \left(\frac{1}{3+r^2-\sqrt{3}r}\right)^\alpha + \left(\frac{1}{3+r^2+\sqrt{3}r}\right)^\alpha\right]}$$

$$\cdots (9)$$

$$\frac{1}{\frac{2p(1-r^2)N}{N-N_1}\left[\left(\frac{1}{\sqrt{3}-1}\right)^\alpha + \left(\frac{1}{4-\sqrt{3}}\right)^\alpha + \left(\frac{1}{4+\sqrt{3}}\right)^\alpha\right]}$$

$$\cdots (10)$$

$$\frac{1/r^\alpha}{\frac{2pr^2N}{N_1}\left[\left(\frac{1}{\sqrt{3}-r}\right)^\alpha + \left(\frac{1}{3+r^2-\sqrt{3}r}\right)^\alpha + \left(\frac{1}{3+r^2+\sqrt{3}r}\right)^\alpha\right]}$$

$$\cdots (11)$$

où d est la distance entre la BS (200) et la MS (301, 311), c est une constante déterminée par une fréquence et un environnement, $\alpha$ est un exposant de perte de trajet, p est une charge de cellule, N est le nombre de sous-canaux entiers, et $N_1$ est le nombre de sous-canaux attribués à une cellule interne (200b).

FIG.1

FIG.2

FIG.3

FIG.4

FIG.5

FIG.6

EP 1 418 776 B1

FIG.7

FIG.8

FIG.9